# EUROPÄISCHE PATENTSCHRIFT

(11) **EP 3 285 959 B1**
(45) Veröffentlichungstag und Bekanntmachung des Hinweises auf die Patenterteilung: **28.08.2019**
(21) Anmeldenummer: 16720744.8
(22) Anmeldetag: 18.04.2016
(51) Int. Cl.: B23Q 7/04

(54) **WERKZEUGMASCHINE MIT EINER WERKSTÜCKAUFLAGE UND VERFAHREN ZUM BE- UND ENTLADEN EINER WERKSTÜCKAUFLAGE EINER WERKZEUGMASCHINE**
MACHINE TOOL COMPRISING A WORK SUPPORT AND METHOD FOR LOADING AND UNLOADING A WORK SUPPORT OF A MACHINE TOOL
MACHINE-OUTIL COMPRENANT UN SUPPORT DE PIÈCE ET PROCÉDÉ SERVANT À CHARGER ET À DÉCHARGER UN SUPPORT DE PIÈCE D'UNE MACHINE-OUTIL

(30) Priorität: 20.04.2015 DE 102015207122
(43) Veröffentlichungstag der Anmeldung: 28.02.2018
(73) Patentinhaber: Trumpf Werkzeugmaschinen GmbH + Co. KG, 71254 Ditzingen (DE)
(72) Erfinder: DEISS, Magnus, 70372 Stuttgart (DE); EPPERLEIN, Peter, 71229 Leonberg (DE); PROKOP, Heinz-Jürgen, 45134 Essen (DE); SCHMAUDER, Frank, 72555 Metzingen (DE)
(74) Vertreter: Kohler Schmid Möbus Patentanwälte
(86) Internationale Anmeldenummer: PCT/EP2016/058550
(87) Internationale Veröffentlichungsnummer: WO 2016/169891

(56) Entgegenhaltungen:
- EP-A1- 1 935 526
- US-A1- 2003 147 729

## Beschreibung

Die Erfindung betrifft eine Werkzeugmaschine zum Bearbeiten von vorzugsweise plattenartigen Werkstücken,
- mit einer Werkstückauflage zur Lagerung eines zu bearbeitenden Werkstücks während einer Bearbeitung des Werkstücks und zur Lagerung eines bei der Bearbeitung des Werkstücks aus diesem erzeugten Bearbeitungsprodukts, wobei die Werkstückauflage einen ersten Auflagenteil und einen weiteren Auflagenteil aufweist sowie
- mit einer Werkstück-Bewegungsvorrichtung.

Die Erfindung betrifft des Weiteren ein Verfahren zum Be- und Entladen einer Werkstückauflage einer Werkzeugmaschine zum Bearbeiten von vorzugsweise plattenartigen Werkstücken, wobei die Werkstückauflage einen ersten Auflagenteil und einen weiteren Auflagenteil aufweist und ein zu bearbeitendes Werkstück während einer Bearbeitung des Werkstücks sowie ein bei der Bearbeitung des Werkstücks aus diesem erzeugtes Bearbeitungsprodukt von der Werkstückauflage gelagert werden und wobei die Werkzeugmaschine eine Werkstück-Bewegungsvorrichtung aufweist.

Gattungsgemäßer Stand der Technik ist offenbart in US 2003/0147729 A1. Diese Druckschrift betrifft eine Werkzeugmaschine mit einer Werkstückauflage, die mittels einer neben der Werkstückauflage angeordneten Handlingvorrichtung entladen wird. Die Werkstückauflage lagert ein zu bearbeitendes Werkstück und kann gemeinsam mit dem zu bearbeitenden Werkstück in einem Rachenraum eines Maschinengestells der Werkzeugmaschine längs eines oberen und eines unteren Gestellschenkels bewegt werden. Quer zu der Bewegungsrichtung der Werkstückauflage wird das zu bearbeitende Werkstück mittels Spannpratzen bewegt, welche das zu bearbeitende Werkstück fixieren und gemeinsam mit dem zu bearbeitenden Werkstück quer zu der Bewegungsrichtung der Werkstückauflage verfahren. Auf diese Art und Weise wird das zu bearbeitende Werkstück in der für die Bearbeitung erforderlichen Weise in einer horizontalen Ebene gegenüber einem Bearbeitungswerkzeug der Werkzeugmaschine zugestellt.

Die Werkstückauflage der vorbekannten Werkzeugmaschine ist zweigeteilt, wobei ein Trennspalt zwischen den beiden Auflagenteilen auf Höhe des an dem unteren Gestellschenkel vorgesehenen Bearbeitungswerkzeuges in Längsrichtung des unteren Gestellschenkels verläuft. Einer der Auflagenteile ist der Handlingvorrichtung zugeordnet und bildet dementsprechend einen entladeseitigen Auflagenteil.

Nach der Bearbeitung eines Werkstücks wird ein bei der Werkstückbearbeitung erzeugtes Bearbeitungsprodukt mittels der beweglichen Spannpratzen auf den entladeseitigen Auflagenteil bewegt. Gemeinsam mit dem Bearbeitungsprodukt verfährt der entladeseitige Auflagenteil über eine horizontale Plattform der Handlingvorrichtung. Anschließend wird das Bearbeitungsprodukt von einem Greifer der Handlingvorrichtung erfasst und der entladeseitige Auflagenteil wird von der Handlingvorrichtung wegbewegt und dabei unter dem Bearbeitungsprodukt herausgezogen. Das Bearbeitungsprodukt wird infolgedessen unter Schwerkraftwirkung auf der unterhalb des Bearbeitungsprodukts angeordneten horizontalen Plattform der Handlingvorrichtung abgelegt.

Den Stand der Technik konstruktiv und verfahrensbezogen zu vereinfachen, ist Aufgabe der vorliegenden Erfindung.

Erfindungsgemäß gelöst wird diese Aufgabe durch die Werkzeugmaschine gemäß Patentanspruch 1 und durch das Verfahren gemäß Patentanspruch 14.

Im Falle der Erfindung wird zum Be- und Entladen der Werkzeugmaschine ein zusätzlich zu einem beladeseitigen Auflagenteil einer Werkstückauflage vorgesehener weiterer Auflagenteil genutzt, der während der Werkstückbearbeitung das zu bearbeitende Werkstück und danach das aus dem Werkstück erzeugte Bearbeitungsprodukt lagert. Eine neben der Werkzeugmaschine angeordnete und/oder ausschließlich zum Be- und Entladen der Werkstückauflage vorgesehene Handlingvorrichtung ist folglich verzichtbar. Relativ zu dem in einem Beladebereich der Werkzeugmaschine angeordneten beladeseitigen Auflagenteil verfährt der weitere Auflagenteil während des Beladevorgangs in eine Übernahmeposition. In der Übernahmeposition ist der weitere Auflagenteil unter oder über dem beladeseitigen Auflagenteil angeordnet, der zu diesem Zeitpunkt auf ein Ausweichniveau angehoben oder abgesenkt ist. In der Übernahmeposition kann der weitere Auflagenteil beispielsweise durch eine oberhalb oder unterhalb des beladeseitigen Auflagenteils angeordnete oder dorthin verfahrbare Beladevorrichtung mit einem zu bearbeitenden Werkstück beladen werden. Nach der Übernahme eines zu bearbeitenden Werkstücks wird der nun mit dem zu bearbeitenden Werkstück beladene weitere Auflagenteil aus der Übernahmeposition in dem Beladebereich in einen Entladebereich der Werkzeugmaschine bewegt, der in horizontaler Richtung gegenüber dem Beladebereich versetzt ist. Noch während sich der weitere Auflagenteil horizontal aus dem Beladebereich in den Entladebereich der Werkzeugmaschine bewegt oder nach Abschluss der Horizontalbewegung des weiteren Auflagenteils wird der beladeseitige Auflagenteil von dem Ausweichniveau auf ein Beladeniveau abgesenkt oder angehoben. Auf einem Beladeniveau befindet sich auch der in dem Entladebereich der Werkzeugmaschine angeordnete und mit dem zu bearbeitenden Werkstück beladene weitere Auflagenteil. Infolgedessen fluchten der beladeseitige Auflagenteil und der weitere Auflagenteil an ihrer Oberseite in horizontaler Richtung derart miteinander, dass das zunächst noch ausschließlich auf dem weiteren Auflagenteil gelagerte Werkstück mittels einer Werkstück-Bewegungsvorrichtung der Werkzeugmaschine mit einer horizontalen Werkstückbewegung über den weiteren Auflagenteil und den beladeseitigen Auflagenteil bewegt und dadurch die Werkstückauflage insgesamt mit dem zu bearbeitenden Werkstück beladen werden kann.

Es folgt eine Werkstückbearbeitung, im Rahmen derer aus dem zu bearbeitenden Werkstück ein Bearbeitungsprodukt erzeugt wird. Zur Bearbeitung auszuführende Werkstückbewegungen können insbesondere mit Hilfe der Werkstück-Bewegungsvorrichtung erzeugt werden. Vorzugsweise mittels der Werkstück-Bewegungsvorrichtung wird das Bearbeitungsprodukt auf den nach wie vor in dem Entladebereich der Werkzeugmaschine angeordneten weiteren Auflagenteil bewegt. Die von dem weiteren Auflagenteil in dem Entladebereich der Werkzeugmaschine eingenommene Position bildet eine Entlade-Ausgangspo-sition, von der ausgehend ein Entladevorgang durchgeführt wird.

Zum Entladen der Werkstückauflage bewegt sich der weitere Auflagenteil mit einer Entladebewegung aus der Entlade-Ausgangsposition in dem Entladebereich zurück in die Übernahmeposition in dem Beladebereich der Werkzeugmaschine. Damit sich der weitere Auflagenteil in die Übernahmeposition bewegen kann, wird zuvor der beladeseitige Auflagenteil von dem Beladeniveau auf das Ausweichniveau angehoben oder abgesenkt. Von dem nach der Werkstückbearbeitung auf dem weiteren Auflagenteil gelagerten Bearbeitungsprodukt wird die Entladebewegung des weiteren Auflagenteils nicht mitvollzogen. Das Bearbeitungsprodukt verbleibt vielmehr in dem Entladebereich der Werkzeugmaschine und der weitere Auflagenteil führt die Entladebewegung relativ zu dem Bearbeitungsprodukt aus, das aufgrund dieser Relativbewegung von dem weiteren Auflagenteil und somit von der Werkstückauflage entladen wird. Mit dem Entladen des Bearbeitungsprodukts gelangt der weitere Auflagenteil in die Übernahmeposition und ein weiterer Beladevorgang kann beginnen.

Besondere Ausführungsarten der Erfindung gemäß den unabhängigen Patentansprüchen 1 und 14 ergeben sich aus den abhängigen Patentansprüchen 2 bis 13 und 15.

Gemäß Patentanspruch 2 stellt in bevorzugter Ausgestaltung der erfindungsgemäßen Werkzeugmaschine das Beladeniveau des beladeseitigen Auflagenteils und das Beladeniveau des weiteren Auflagenteils jeweils ein Arbeitsniveau dar. Infolgedessen kann unmittelbar nach dem Beladen der Werkstückauflage mit einem zu bearbeitenden Werkstück die zur Bearbeitung erforderliche Bewegung des Werkstücks über den beladeseitigen Auflagenteil und den weiteren Auflagenteil der Werkstückauflage eingeleitet werden.

Durch eine kompakte Bauweise zeichnet sich die erfindungsgemäße Werkzeugmaschine gemäß Patentanspruch 3 aus. Im Falle dieser Erfindungsbauart liegt das Ausweichniveau des beladeseitigen Auflagenteils in vertikaler Richtung oberhalb des Beladeniveaus. Der weitere Auflagenteil ist in der Übernahmeposition unter dem beladeseitigen Auflagenteil angeordnet. Unterhalb des beladeseitigen Auflagenteils und damit in dem Zwischenraum zwischen dem auf das Ausweichniveau angehobenen beladeseitigen Auflagenteil und dem in die Übernahmeposition bewegten weiteren Auflagenteil ist eine Beladevorrichtung vorgesehen, mittels derer der weitere Auflagenteil mit einem zu bearbeitenden Werkstück beladen werden kann.

Eine bevorzugte Weiterbildung der Erfindungsbauart gemäß Patentanspruch 3 ist Gegenstand von Patentanspruch 4. Gemäß Patentanspruch 4 ist in den Beladebereich der Werkzeugmaschine auch ein Werkstücklager integriert. Das Werkstücklager liegt unterhalb des beladeseitigen Auflagenteils und unterhalb des in die Übernahmeposition bewegten weiteren Auflagenteils der Werkstückauflage. Als Werkstücklager in Frage kommen beispielsweise unmittelbar die Aufstellfläche der Werkzeugmaschine oder eine auf der Aufstellfläche der Werkzeugmaschine abgestellte Werkstückpalette. Die Beladevorrichtung kann mit einer vertikalen Hubbewegung auf ein unteres Hubniveau sowie auf ein oberes Hubniveau bewegt werden. Bei Anordnung auf dem unteren Hubniveau kann die Beladevorrichtung an dem Werkstücklager ein zu bearbeitendes Werkstück aufnehmen. Auf diese Weise kann die Beladevorrichtung bereits ein neues zu bearbeitendes Werkstück aufnehmen, während ein durch den beladeseitigen Auflagenteil und den weiteren Auflagenteil gelagertes Werkstück bearbeitet wird. Befindet sich der weitere Auflagenteil in einer Position abseits der Übernahmeposition, so kann die Beladevorrichtung mit dem zuvor an dem Werkstücklager aufgenommenen Werkstück von dem unteren Hubniveau auf das obere Hubniveau angehoben werden. Wird anschließend der weitere Auflagenteil in die Übernahmeposition unter der Beladevorrichtung und dem von der Beladevorrichtung aufgenommenen Werkstück bewegt, so kann das Werkstück von der Beladevorrichtung an den weiteren Auflagenteil übergeben werden. Der beladeseitige Auflagenteil ist bei in die Übernahmeposition bewegtem weiteren Auflagenteil auf das Ausweichniveau angehoben.

Aufgrund der Übereinanderanordnung des Werkstücklagers, der Beladevorrichtung, des in die Übernahmeposition bewegten weiteren Auflagenteils und des beladeseitigen Auflagenteils lässt sich der Beladebereich der erfindungsgemäßen Werkzeugmaschine auf einer kleinen Grundfläche unterbringen. Daraus wiederum resultiert ein geringer Grundflächenbedarf der Gesamtanordnung.

Der Einfachheit halber sind in weiterer Ausgestaltung der Erfindung der sich auf das Ausweichniveau bewegende beladeseitige Auflagenteil und die sich auf das obere Hubniveau bewegende Beladevorrichtung bewegungsmäßig gekoppelt (Patentanspruch 5). Bevorzugtermaßen ist dabei der beladeseitige Auflagenteil mittels der sich auf das obere Hubniveau bewegenden Beladevorrichtung auf das Ausweichniveau bewegbar (Patentanspruch 6). Ein einziger Hubantrieb reicht dementsprechend aus, um neben der Hubbewegung der Beladevorrichtung auch die Hubbewegung des beladeseitigen Auflagenteils zu erzeugen. In bevorzugter Ausgestaltung der Erfindung wird der beladeseitige Auflagenteil durch die Beladevorrichtung vom Maschinenkörper abgehoben bzw. auf dem Maschinenkörper abgesetzt. Der beladeseitige Auflagenteil kann während der Bearbeitung eines Werkstücks von einem Grundkörper bzw. einer Tragstruktur der Werkzeugmaschine schwingungsarm gelagert werden.

Zur Gewährleistung eines funktionssicheren Transfers des zu bearbeitenden Werkstücks von dem Beladebereich in den Entladebereich der erfindungsgemäßen Werkzeugmaschine ist im Falle der Erfindungsbauart gemäß Patentanspruch 7 eine Werkstück-Haltevorrichtung vorgesehen, mittels derer das zu bearbeitende Werkstück bei der Bewegung des weiteren Auflagenteils aus der Übernahmeposition in den Entladebereich relativ zu dem weiteren Auflagenteil festlegbar ist.

In weiterer Ausgestaltung der Erfindung ist das zu bearbeitende Werkstück an die Werkstück-Haltevorrichtung übergebbar, indem die das zu bearbeitende Werkstück haltende Beladevorrichtung und/oder der das zu bearbeitende Werkstück lagernde weitere Auflagenteil einerseits und die Werkstück-Haltevorrichtung andererseits relativ zueinander mit einer Werkstück-Übergabebewegung bewegbar sind (Patentanspruch 8). Mit der eigens zu diesem Zweck ausgeführten Werkstück-Übergabebewegung wird das zu bearbeitende Werkstück gegenüber der Werkstück-Haltevorrichtung derart positioniert, dass es sicher an der Werkstück-Haltevorrichtung fixiert werden kann.

In weiterer bevorzugter Ausgestaltung der Erfindung wird als Werkstück-Haltevorrichtung, mittels derer ein zu bearbeitendes Werkstück bei der Bewegung des weiteren Auflagenteils aus der Übernahmeposition in den Entladebereich der Werkzeugmaschine gegenüber dem weiteren Auflagenteil festgelegt ist, die Werkstück-Bewegungsvorrichtung genutzt, mittels derer ein mit dem weiteren Auflagenteil in den Entladebereich bewegtes Werkstück über den weiteren Auflagenteil und den beladeseitigen Auflagenteil bewegt werden kann (Patentanspruch 9). Die Werkstück-Bewegungsvorrichtung lässt sich zu diesem Zweck in eine der Übernahmeposition des weiteren Auflagenteils zugeordnete Position bewegen, in welcher das zu bearbeitende Werkstück an der Werkstück-Bewegungsvorrichtung fixiert wird. Anschließend bewegt sich die Werkstück-Bewegungsvorrichtung gemeinschaftlich mit dem weiteren Auflagenteil und dem auf diesem gelagerten Werkstück in den Entladebereich der Werkzeugmaschine. Nachdem die momentane Position der Werkstück-Bewegungsvorrichtung in dem Koordinatensystem der numerischen Steuerung der Werkzeugmaschine definiert ist, gilt Entsprechendes für das an der Werkstück-Bewegungsvorrichtung fixierte Werkstück.

Patentanspruch 10 betrifft eine Bauart der erfindungsgemäßen Werkzeugmaschine mit einer Produkt-Haltevorrichtung, an welcher das bei der Werkstückbearbeitung erzeugte Bearbeitungsprodukt bei der Entladebewegung des weiteren Auflagenteils zum Verbleib in dem Entladebereich der Werkzeugmaschine festgelegt wird.

Ausweislich der Patentansprüche 11 und 15 wird die Produkt-Haltevorrichtung in weiterer bevorzugter Ausgestaltung der Erfindung von der Werkstück-Bewegungsvorrichtung gebildet.

Im Interesse eines funktionssicheren Entladevorgangs ist in Weiterbildung der Erfindung eine Entladehilfevorrichtung vorgesehen, mittels derer das Bearbeitungsprodukt nach der Entladebewegung des weiteren Auflagenteils von der Produkt-Haltevorrichtung gelöst werden kann (Patentanspruch 12).

Ist unter dem in der Entlade-Ausgangsposition angeordneten weiteren Auflagenteil eine Produktablage vorgesehen (Patentanspruch 13), so kann ein Bearbeitungsprodukt aufgrund der Entladebewegung des weiteren Auflagenteils auf einfache Art und Weise unter Nutzung der Schwerkraft an die Produktablage übergeben werden. Da sich die Produktablage unter dem in den Entladebereich der Werkzeugmaschine bewegten weiteren Auflagenteil befindet, kommt der Entladebereich der erfindungsgemäßen Werkzeugmaschine mit einer kleinen Grundfläche aus.

Nachfolgend wird die Erfindung anhand beispielhafter schematischer Darstellungen näher erläutert. Es zeigen:
- Figur 1: eine Werkzeugmaschine in Form einer Laserschneidmaschine zum Schneiden von Blechen mit einer zweiteiligen Werkstückauflage und
- Figuren 2 bis 17: das Be- und Entladen der Werkstückauflage der Laserschneidmaschine gemäß Figur 1.

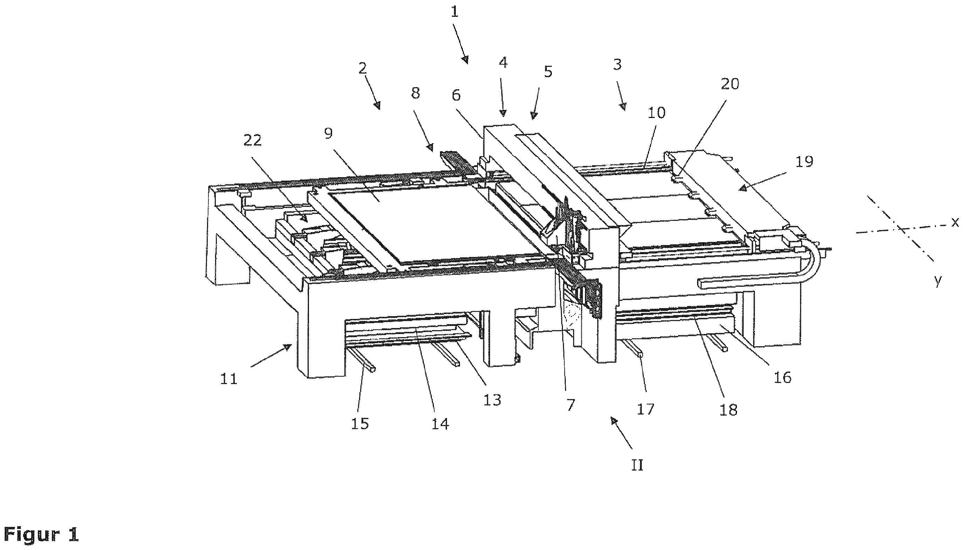

Eine in Figur 1 dargestellte Laserschneidmaschine 1 als Beispiel einer Werkzeugmaschine weist einen Beladebereich 2 sowie einen Entladebereich 3 auf. Zwischen dem Beladebereich 2 und dem Entladebereich 3 ist eine Bearbeitungsstation 4 angeordnet. Die Bearbeitungsstation 4 umfasst eine portalartige Führungsstruktur 5 mit einem Portalträger 6. Längs des Portalträgers 6 ist ein Laserschneidkopf 7 in einer ersten Achsrichtung (y-Richtung) verfahrbar. Laserschweißmaschinen, Stanzmaschinen oder kombinierte Stanz-/Laserschneidmaschinen stellen weitere Beispiele für erfindungsgemäße Werkzeugmaschinen dar.

Unterhalb des Portalträgers 6 der Laserschneidmaschine 1 erstreckt sich beidseits der Bearbeitungsstation 4 eine Werkstückauflage 8. Die Werkstückauflage 8 ist zweiteilig ausgebildet und umfasst einen beladeseitigen Auflagenteil 9 sowie einen weiteren Auflagenteil 10, der relativ zu dem beladeseitigen Auflagenteil 9 in einer zweiten Achsrichtung (x-Richtung) bewegbar ist. In Figur 1 ist der weitere Auflagenteil 10 in dem Entladebereich 3 der Laserschneidmaschine 1 angeordnet.

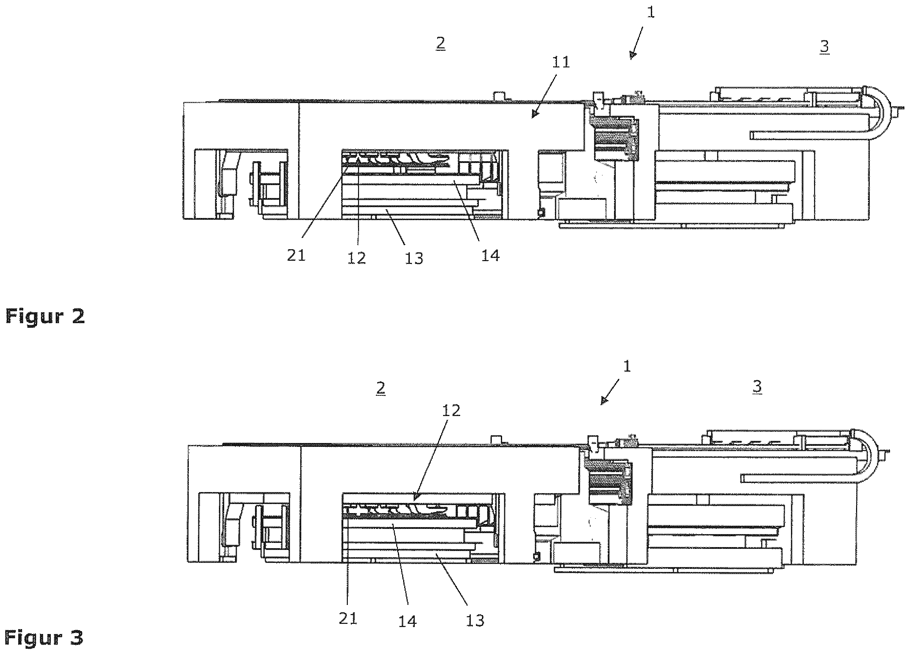

Der beladeseitige Auflagenteil 9 liegt in Figur 1 auf einer rahmenartigen Tragstruktur 11 der Laserschneidmaschine 1 auf. Unter dem beladeseitigen Auflagenteil 9 ist eine in Figur 1 verdeckte und als Saugerrahmen 12 (Figur 2) ausgebildete Beladevorrichtung angeordnet. Der Saugerrahmen 12 ist über einem Werkstücklager angeordnet, in dem dargestellten Beispielsfall über einer Rohblechpalette 13. Auf der Rohblechpalette 13 sind zu bearbeitende Werkstücke in Form von Rohblechen 14 gestapelt. An Schienen 15 kann die Rohblechpalette 13 zwischen einer Position innerhalb und einer Position außerhalb der rahmenartigen Tragstruktur 11 verfahren.

In dem Entladebereich 3 der Laserschneidmaschine 1 ist eine als Produktablage vorgesehene Restgitterpalette 16 an Schienen 17 zwischen einer Position innerhalb der rahmenartigen Tragstruktur 11 und einer Position außerhalb der rahmenartigen Tragstruktur 11 verfahrbar. Die Restgitterpalette 16 lagert Bearbeitungsprodukte in Form von Restgittern 18.

Ebenso wie der in Figur 1 über der Restgitterpalette 16 angeordnete weitere Auflagenteil 10 kann eine Werkstück-Bewegungsvorrichtung 19 motorisch angetrieben längs der rahmenartigen Tragstruktur 11 in x-Richtung verfahren. Spannpratzen 20 der Werkstück-Bewegungsvorrichtung 19 dienen zur klemmenden Fixierung eines Rohblechs 14 bzw. eines Restgitters 18 an der Werkstück-Bewegungsvorrichtung 19.

Figur 2 zeigt die Laserschneidmaschine 1 in dem Funktionszustand gemäß Figur 1 und dabei in der Draufsicht in Richtung des Pfeils II in Figur 1. Der Portalträger 6 und der Laserschneidkopf 7 sind in Figur 2 und auch in den Figuren 3 bis 17 der Übersichtlichkeit halber nicht dargestellt.

Durch eine Öffnung der rahmenartigen Tragstruktur 11 hindurch sind in Figur 2 der Saugerrahmen 12 und an dem Saugerrahmen 12 angebrachte Tragsauger 21 zu erkennen. Die Tragsauger 21 sind herkömmlicher Bauart. In Figur 2 sind die Tragsauger 21 von dem auf der Rohblechpalette 13 zuoberst abgelegten Rohblech 14 in vertikaler Richtung beabstandet.

Ausgehend von diesen Verhältnissen wird der Saugerrahmen 12 so weit abgesenkt, bis er auf einem unteren Hubniveau angeordnet ist und die Tragsauger 21 auf dem zuoberst liegenden Rohblech 14 aufsetzen.

Zur Bewegung des Saugerrahmens 12 in vertikaler Richtung dient ein an der rahmenartigen Tragstruktur 11 der Laserschneidmaschine 1 motorisch heb- und senkbarer Hubrahmen 22 (Figur 1), an welchem der Saugerrahmen 12 angebracht ist. In x-Richtung ist der Saugerrahmen 12 gegenüber dem Hubrahmen 22 zustellbar.

Liegen die Tragsauger 21 an dem oberen Rohblech 14 des auf der Rohblechpalette 13 gelagerten Rohblechstapels an, wird an die Tragsauger 21 ein Unterdruck angelegt und das von den Tragsaugern 21 beaufschlagte Rohblech 14 wird an dem Saugerrahmen 12 fixiert (Figur 3).

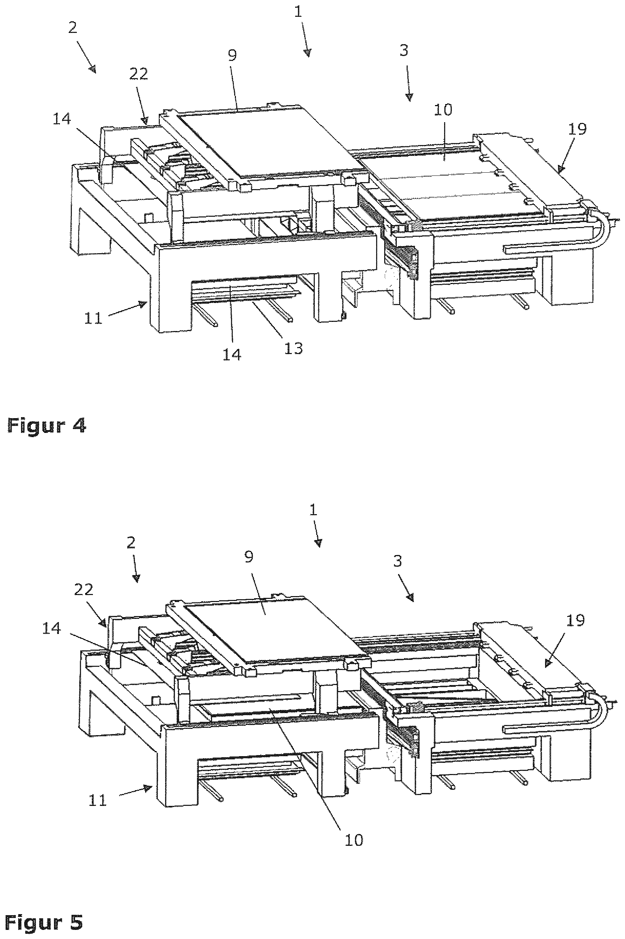

Anschließend wird der Saugerrahmen 12 gemeinsam mit dem von dem Saugerrahmen 12 aufgenommenen Rohblech 14 von dem unteren Hubniveau auf ein oberes Hubniveau angehoben. Wie bereits die zuvor ausgeführte Absenkbewegung wird auch die Bewegung des Saugerrahmens 12 auf das obere Hubniveau mittels des Hubrahmens 22 ausgeführt. Bei der ausgehend von dem unteren Hubniveau des Saugerrahmens 12 ausgeführten Hubbewegung läuft der Hubrahmen 22 mit seiner Oberseite auf die Unterseite des beladeseitigen Auflagenteils 9 auf. Bei fortgesetzter Hubbewegung des Hubrahmens 22 wird der beladeseitige Auflagenteil 9 von der rahmenartigen Tragstruktur 11 abgehoben und ausgehend von der Position gemäß den Figuren 1 bis 3 nach oben auf ein Ausweichniveau bewegt (Figur 4). Bei auf dem Ausweichniveau angeordnetem beladeseitigen Auflagenteil 9 liegt das an dem Saugerrahmen 12 gehaltene Rohblech 14 geringfügig höher als der nach wie vor in dem Entladebereich 3 befindliche weitere Auflagenteil 10.

Der weitere Auflagenteil 10 kann folglich in x-Richtung aus dem Entladebereich 3 in eine Übernahmeposition verfahren, in welcher er in dem Beladebereich 2 unter dem beladeseitigen Auflagenteil 9 und auch unter dem Saugerrahmen 12 und dem daran festgelegten Rohblech 14 auf einem Beladeniveau angeordnet ist (Figur 5).

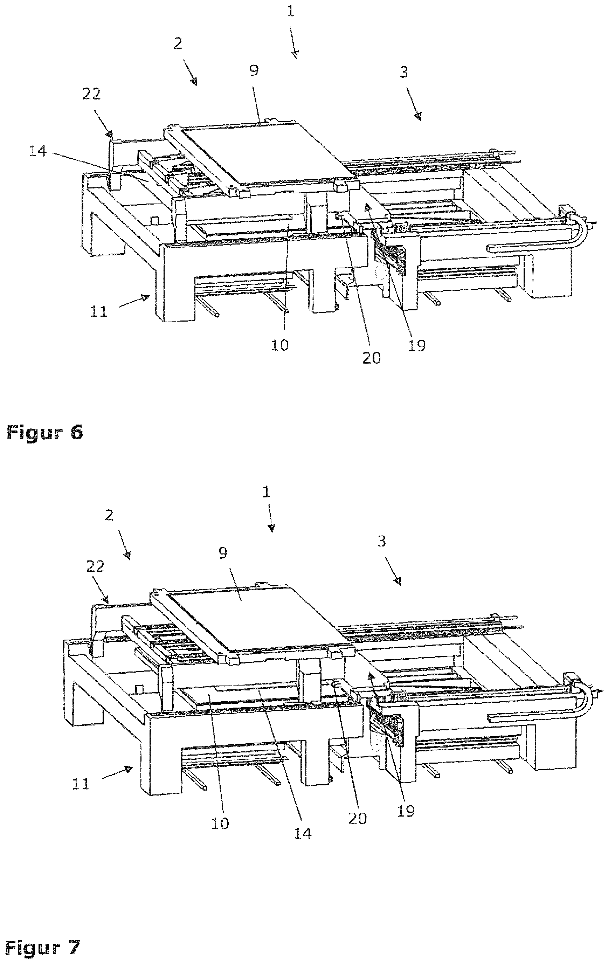

Zeitgleich mit dem weiteren Auflagenteil 10 oder - wie in dem dargestellten Beispielsfall - zeitlich nach dem weiteren Auflagenteil 10 verfährt die Werkstück-Bewegungsvorrichtung 19 aus dem Entladebereich 3 in Richtung auf den Beladebereich 2 (Figur 6). Die Spannpratzen 20 der Werkstück-Bewegungsvorrichtung 19 sind geöffnet.

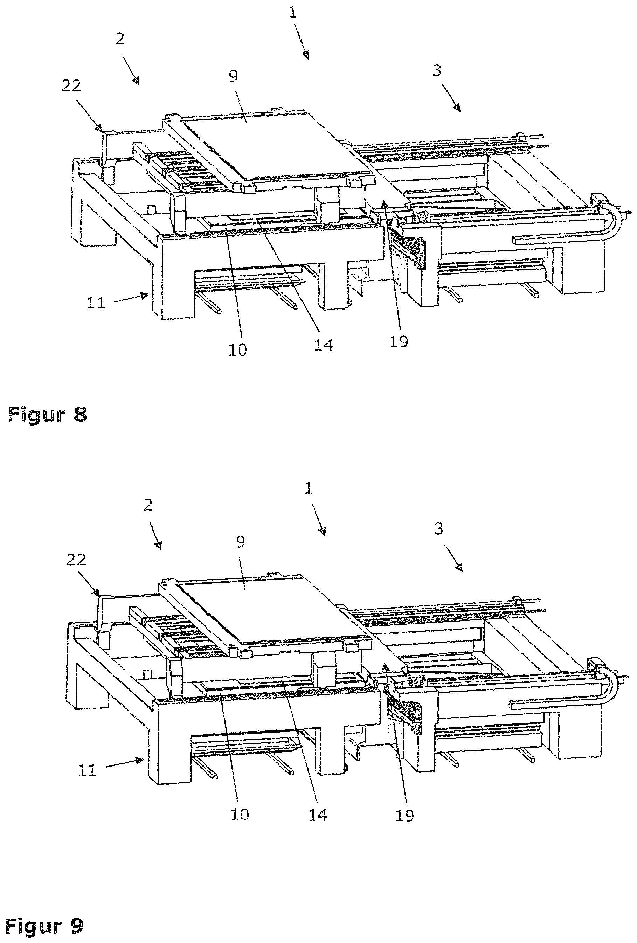

Nun verfährt der Saugerrahmen 12 gemeinsam mit dem von den Tragsaugern 21 angesaugten Rohblech 14 relativ zu dem Hubrahmen 22 in x-Richtung und dabei in Richtung auf die Werkstück-Bewegungsvorrichtung 19 (Figur 7). Mit einer kurzen Hubbewegung wird dann der Hubrahmen 22 abgesenkt, bis das an dem Saugerrahmen 12 festgelegte Rohblech 14 auf dem weiteren Auflagenteil 10 zu liegen kommt (Figur 8). Danach bewegt sich der Saugerrahmen 12 mit dem Rohblech 14 erneut relativ zu dem Hubrahmen 22 in Richtung auf die Werkstück-Bewegungsvorrichtung 19. Das Rohblech 14 gleitet bei dieser Werkstück-Übergabebewegung über den weiteren Auflagenteil 10 und wird mit seinem in Bewegungsrichtung voreilenden Rand in die geöffneten Spannpratzen 20 der Werkstück-Bewegungsvorrichtung 19 eingeschoben und dadurch an die Werkstück-Bewegungsvorrichtung 19 übergeben (Figur 9). Die Spannpratzen 20 werden geschlossen und damit ist das Rohblech 14 an der Werkstück-Bewegungsvorrichtung 19 klemmend fixiert. Die Tragsauger 21 des Saugerrahmens 12 werden drucklos geschaltet und der Saugerrahmen 12 gibt das Rohblech 14 frei. Der nach wie vor in der Übernahmeposition in dem Beladebereich 2 der Laserschneidmaschine 1 angeordnete weitere Auflagenteil 10 ist nun mit dem Rohblech 14 beladen.

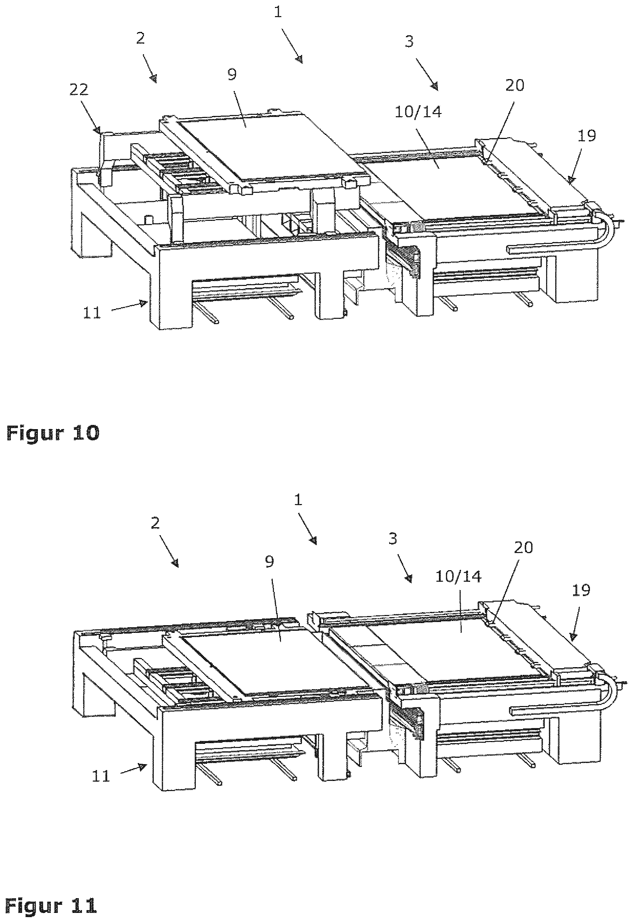

Der mit dem Rohblech 14 beladene weitere Auflagenteil 10 verfährt in x-Richtung aus der Übernahmeposition in dem Beladebereich 2 in den Entladebereich 3 der Laserschneidmaschine 1 (Figur 10). Seine Höhenlage ändert der weitere Auflagenteil 10 bei der Bewegung in x-Richtung nicht. Auch in dem Entladebereich 3 ist der weitere Auflagenteil 10 folglich auf dem Beladeniveau angeordnet.

Synchron mit dem weiteren Auflagenteil 10 und dem auf dem weiteren Auflagenteil 10 gelagerten Rohblech 14 verfährt die Werkstück-Bewegungsvorrichtung 19 in x-Richtung. Während dieser Verfahrbewegung fungiert die Werkstück-Bewegungsvorrichtung als Werkstück-Haltevorrichtung, die als solche das Rohblech 14, mit welchem der weitere Auflagenteil 10 beladen ist, gegen eine unerwünschte Verlagerung relativ zu dem weiteren Auflagenteil 10 sichert.

Nachdem der weitere Auflagenteil 10 mit dem Rohblech 14 den Bereich unter dem beladeseitigen Auflagenteil 9 und dem Saugerrahmen 12 verlassen hat, wird der Hubrahmen 22 aus der Position gemäß Figur 10 so weit abgesenkt, bis der beladeseitige Auflagenteil 9 wieder auf der rahmenartigen Tragstruktur 11 aufliegt (Figur 11). Damit ist auch der beladeseitige Auflagenteil 9 auf einem Beladeniveau angeordnet.

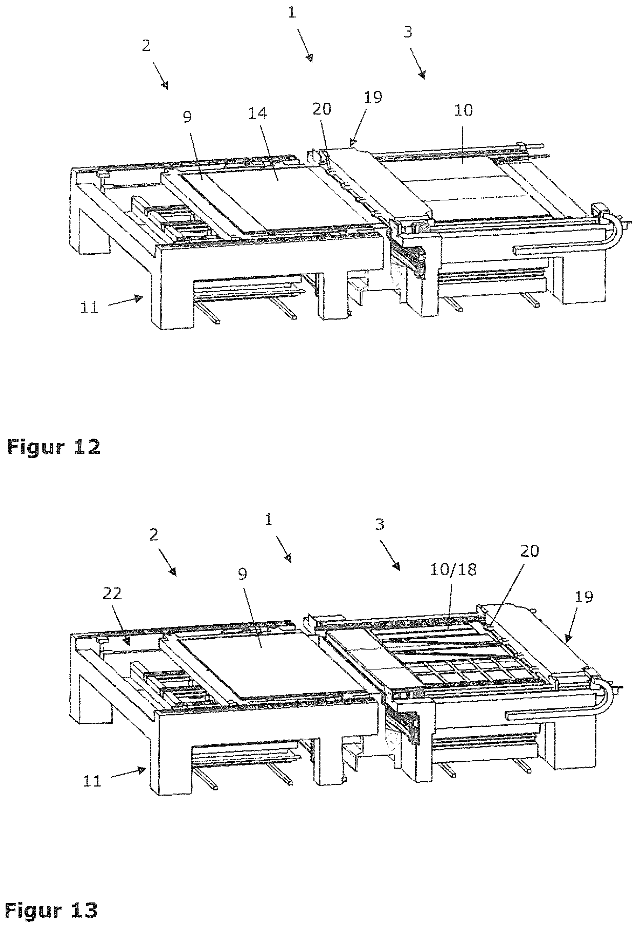

Der mit dem Rohblech 14 beladene und in dem Entladebereich 3 auf dem Beladeniveau angeordnete weitere Auflagenteil 10 und der auf dem Beladeniveau angeordnete beladeseitige Auflagenteil 9 liegen nebeneinander und fluchten an ihrer Oberseite in horizontaler Richtung derart miteinander, dass das Rohblech 14 mittels der Werkstück-Bewegungsvorrichtung 19 mit einer horizontalen Werkstückbewegung über den weiteren Auflagenteil 10 und den beladeseitigen Auflagenteil 9 bewegt werden kann. Mit einer entsprechenden Werkstückbewegung wird das Rohblech 14 mittels der Werkstück-Bewegungsvorrichtung 19 auf den beladeseitigen Auflagenteil 9 transferiert (Figur 12). Damit ist der Beladevorgang an der Werkstückauflage 8 der Laserschneidmaschine 1 abgeschlossen.

Nachdem das Beladeniveau des beladeseitigen Auflagenteils 9 und des weiteren Auflagenteils 10 gleichzeitig das Arbeitsniveau des beladeseitigen Auflagenteils 9 und des weiteren Auflagenteils 10 bildet, kann unmittelbar nach dem Transfer des Rohblechs 14 auf den beladeseitigen Auflagenteil 9 die Bearbeitung des Rohblechs 14 durch den Laserschneidkopf 7 beginnen. Zu Bearbeitungszwecken wird das Rohblech 14 mittels der Werkstück-Bewegungsvorrichtung 19 in x-Richtung relativ zu dem Laserschneidkopf 7 bewegt. Bearbeitungsbewegungen in y-Richtung führt der Laserschneidkopf 7 aus, der zu diesem Zweck längs des Portalträgers 6 der portalartigen Führungsstruktur 5 verfährt.

Im Laufe der Bearbeitung des Rohblechs 14 werden in dem dargestellten Beispielsfall nicht gezeigte Fertigteile ausgeschnitten, die nach Beendigung des Bearbeitungsprozesses von der Werkstückauflage 8 abgenommen werden (nicht gezeigt). Auf der Werkstückauflage 8 verbleibt als Bearbeitungsprodukt ein Restgitter 18, das mittels der Spannpratzen 20 an der Werkstück-Bewegungsvorrichtung 19 festgelegt ist.

Während der Bearbeitung des Rohblechs 14 behält der weitere Auflagenteil 10 seine Position in dem Entladebereich 3 der Laserschneidmaschine 1 bei. Bei der Bearbeitung wird das Rohblech 14 mittels der Werkstück-Bewegungsvorrichtung 19 auch über den weiteren Auflagenteil 10 bewegt. Nach Abschluss der Werkstückbearbeitung verfährt die Werkstück-Bewegungsvorrichtung 19 mit dem Restgitter 18 über den weiteren Auflagenteil 10 in eine Position nahe dem hinteren freien Ende der rahmenartigen Tragstruktur 11. Das Restgitter 18 liegt nun vollständig auf dem weiteren Auflagenteil 10. Die Position, in welcher der weitere Auflagenteil 10 in dem Entladebereich 3 angeordnet ist, bildet eine Entlade-Ausgangsposition des weiteren Auflagenteils 10 (Figur 13).

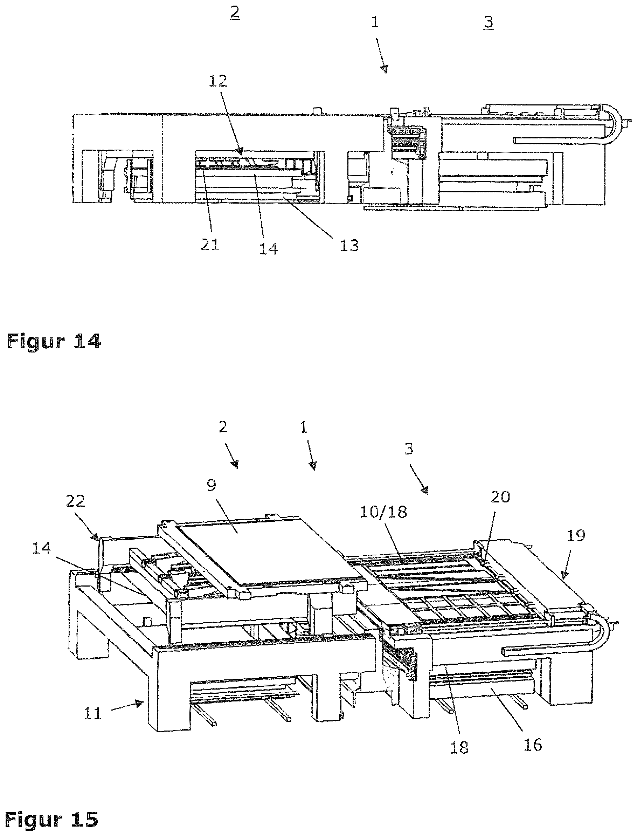

Während die Werkstück-Bewegungsvorrichtung 19 das Rohblech 14 zu Bearbeitungszwecken über die Werkstückauflage 8 bewegt, wird an der Unterseite des beladeseitigen Auflagenteils 9 der Saugerrahmen 12 durch eine entsprechende Absenkbewegung des Hubrahmens 22 relativ zu dem beladeseitigen Auflagenteil 9 auf das untere Hubniveau bewegt. In der vorstehend anhand der Figuren 2 und 3 beschriebenen Weise wird von den Tragsaugern 21 des auf das untere Hubniveau abgesenkten Saugerrahmens 12 das nun auf der Rohblechpalette 13 zuoberst liegende Rohblech 14 angesaugt (Figur 14).

Ist die Bearbeitung eines Rohblechs 14 abgeschlossen und das bei der Werkstückbearbeitung erzeugte Restgitter 18 vollständig auf den weiteren Auflagenteil 10 transferiert (Figur 13), so werden der Saugerrahmen 12 und das daran gehaltene neue Rohblech 14 mittels des Hubrahmens 22 von dem unteren Hubniveau gemäß Figur 14 auf das obere Hubniveau angehoben. Auf dem oberen Hubniveau sind der Saugerrahmen 12 und das neue Rohblech 14 oberhalb des nach wie vor in dem Entladebereich 3 der Laserschneidmaschine 1 befindlichen weiteren Auflagenteils 10 angeordnet. Der beladeseitige Auflagenteil 9 ist auf das Ausweichniveau angehoben. In dem Beladebereich 2 der Laserschneidmaschine 1 ergeben sich damit die Verhältnisse gemäß Figur 15 und somit diejenigen Verhältnisse, die vorstehend im Zusammenhang mit Figur 4 im Detail beschrieben worden sind.

In dem Entladebereich 3 der Laserschneidmaschine 1 befindet sich der weitere Auflagenteil 10 in der Entlade-Ausgangsposition. Das auf dem weiteren Auflagenteil 10 gelagerte Restgitter 18 ist mittels der Spannpratzen 20 an der Werkstück-Bewegungsvorrichtung 19 fixiert.

Ausgehend von diesen Verhältnissen verfährt der weitere Auflagenteil 10 mit einer Entladebewegung aus der Entlade-Ausgangsposition in x-Richtung in den Beladebereich 2 und dort in die Übernahmeposition unter dem beladeseitigen Auflagenteil 9 und dem an dem Saugerrahmen 12 gehaltenen neuen Rohblech 14. Die Werkstück-Bewegungsvorrichtung 19, an welcher das Restgitter 18 mittels der Spannpratzen 20 festgelegt ist, ändert bei der Entladebewegung des weiteren Auflagenteils 10 ihre Position in x-Richtung nicht.

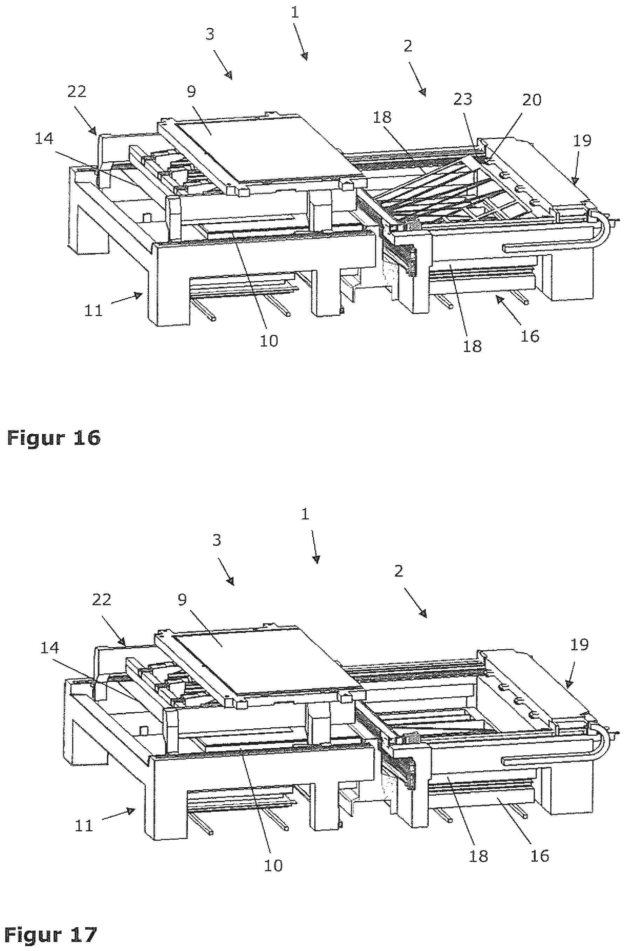

Bei der Entladebewegung aus dem Entladebereich 3 in den Beladebereich 2 verfährt der weitere Auflagenteil 10 folglich relativ zu dem Restgitter 18 und der nunmehr als Produkt-Haltevorrichtung fungierenden Werkstück-Bewegungsvorrichtung 19. Sobald sich der weitere Auflagenteil 10 im Lauf der Entladebewegung unter dem Restgitter 18 herausbewegt hat, wird das Restgitter 18 mit dem zu dem Beladebereich 2 hin liegenden Ende unter Schwerkraftwirkung auf dem Restgitterstapel auf der Restgitterpalette 16 abgelegt. Nun werden die Spannpratzen 20 der Werkstück-Bewegungsvorrichtung 19 geöffnet und die Werkstück-Bewegungsvorrichtung 19 führt in x-Richtung eine kurzhubige Bewegung in Richtung auf das freie Ende der rahmenartigen Tragstruktur 11 aus. Das Restgitter 18 vollzieht die Bewegung der Werkstück-Bewegungsvorrichtung 19 nicht mit sondern schlägt an einem als Entladehilfevorrichtung dienenden Produktanschlag 23 an, der an der rahmenartigen Tragstruktur 11 vorgesehen ist. Aufgrund der von der Werkstück-Bewegungsvorrichtung 19 relativ zu dem Restgitter 18 ausgeführten Bewegung wird das Restgitter 18 funktionssicher von der Werkstück-Bewegungsvorrichtung 19 gelöst (Figur 16). Unter Schwerkraftwirkung wird das Restgitter 18 nun vollständig auf der Restgitterpalette 16 abgelegt (Figur 17).

Der Entladevorgang an der Werkstückauflage 8 der Laserschneidmaschine 1 ist damit abgeschlossen.

Bereits mit der Entladebewegung des weiteren Auflagenteils 10 aus der Entlade-Ausgangsposition in dem Entladebereich 3 in die Übernahmeposition in dem Beladebereich 2 der Laserschneidmaschine 1 wird der nächste Beladevorgang eingeleitet, der anschließend wie in den Figuren 6 bis 11 gezeigt abläuft.

## Patentansprüche

1. Werkzeugmaschine zum Bearbeiten von vorzugsweise plattenartigen Werkstücken,
• mit einer Werkstückauflage (8) zur Lagerung eines zu bearbeitenden Werkstücks (14) während einer Bearbeitung des Werkstücks und zur Lagerung eines bei der Bearbeitung des Werkstücks aus diesem erzeugten Bearbeitungsprodukts (18), wobei die Werkstückauflage (8) einen ersten Auflagenteil und einen weiteren Auflagenteil (10) aufweist sowie
• mit einer Werkstück-Bewegungsvorrichtung (19),
**dadurch gekennzeichnet,**
• **dass** der erste Auflagenteil als beladeseitiger Auflagenteil (9) vorgesehen und in einem Beladebereich (2) der Werkzeugmaschine angeordnet ist,
• **dass** der weitere Auflagenteil (10) relativ zu dem beladeseitigen Auflagenteil (9) in den Beladebereich (2) und in einen gegenüber dem Beladebereich (2) in horizontaler Richtung versetzten Entladebereich (3) der Werkzeugmaschine bewegbar ist,
• **wobei** der beladeseitige Auflagenteil (9) in vertikaler Richtung verstellbar und auf ein Beladeniveau sowie auf ein Ausweichniveau bewegbar ist, das als oberes Ausweichniveau oberhalb oder als unteres Ausweichniveau unterhalb des Beladeniveaus angeordnet ist,
• **wobei** der weitere Auflagenteil (10) bei auf dem Ausweichniveau angeordnetem beladeseitigen Auflagenteil (9) in dem Beladebereich (2) in eine Übernahmeposition unter dem auf das obere Ausweichniveau bewegten beladeseitigen Auflagenteil (9) oder über dem auf das untere Ausweichniveau bewegten beladeseitigen Auflagenteil (9) bewegbar und in der Übernahmeposition mit einem zu bearbeitenden Werkstück (14) beladbar ist,
• **wobei** der mit dem zu bearbeitenden Werkstück (14) beladene weitere Auflagenteil (10) aus der Übernahmeposition in dem Beladebereich (2) in den Entladebereich (3) bewegbar und in dem Entladebereich (3) auf einem Beladeniveau anordenbar ist,
• **wobei** der in dem Entladebereich (3) auf dem Beladeniveau angeordnete und mit dem zu bearbeitenden Werkstück (14) beladene weitere Auflagenteil (10) und der auf dem Beladeniveau angeordnete beladeseitige Auflagenteil (9) nebeneinander liegen und an ihrer Oberseite in horizontaler Richtung derart miteinander fluchten, dass das zu bearbeitende Werkstück (14) mittels der Werkstück-Bewegungsvorrichtung (19) mit einer horizontalen Werkstückbewegung über den weiteren Auflagenteil (10) und den beladeseitigen Auflagenteil (9) bewegbar ist,
• **wobei** der weitere Auflagenteil (10) nach der Werkstückbearbeitung in dem Entladebereich (3) in einer Entlade-Ausgangsposition anordenbar ist, in welcher das bei der Werkstückbearbeitung erzeugte Bearbeitungsprodukt (18) von dem weiteren Auflagenteil (10) lagerbar ist und
• **wobei** der weitere Auflagenteil (10) bei auf dem Ausweichniveau angeordnetem beladeseitigen Auflagenteil (9) mit einer Entladebewegung aus der Entlade-Ausgangsposition in dem Entladebereich (3) in die Übernahmeposition in dem Beladebereich (2) und dabei unter Entladen des Bearbeitungsprodukts (18) relativ zu dem in dem Entladebereich (3) verbleibenden Bearbeitungsprodukt (18) bewegbar ist.

2. Werkzeugmaschine nach Anspruch 1, **dadurch gekennzeichnet, dass** als Beladeniveau des beladeseitigen Auflagenteils (9) und des weiteren Auflagenteils (10) ein Arbeitsniveau des beladeseitigen Auflagenteils (9) und des weiteren Auflagenteils (10) vorgesehen ist und dass der in dem Entladebereich (3) auf dem Arbeitsniveau angeordnete und mit dem zu bearbeitenden Werkstück (14) beladene weitere Auflagenteil (10) und der auf dem Arbeitsniveau angeordnete beladeseitige Auflagenteil (9) an ihrer Oberseite in horizontaler Richtung derart miteinander fluchten, dass das zu bearbeitende Werkstück (14) mittels der Werkstück-Bewegungsvorrichtung (19) zur Durchführung einer Werkstückbearbeitung mit einer horizontalen Werkstückbewegung über den weiteren Auflagenteil (10) und den beladeseitigen Auflagenteil (9) bewegbar ist.

3. Werkzeugmaschine nach Anspruch 1 oder Anspruch 2, **dadurch gekennzeichnet,**
• **dass** der beladeseitige Auflagenteil (9) auf ein Ausweichniveau oberhalb des Beladeniveaus bewegbar ist,
• **dass** der weitere Auflagenteil (10) in eine Übernahmeposition unter dem auf dem Ausweichniveau angeordneten beladeseitigen Auflagenteil (9) bewegbar ist und
• **dass** zwischen dem auf dem Ausweichniveau angeordneten beladeseitigen Auflagenteil (9) und dem in die Übernahmeposition bewegten weiteren Auflagenteil (10) eine Beladevorrichtung (12) vorgesehen ist, mittels derer der weitere Auflagenteil (10) mit einem zu bearbeitenden Werkstück (14) beladbar ist.

4. Werkzeugmaschine nach Anspruch 3, **dadurch gekennzeichnet,**
• **dass** unter dem beladeseitigen Auflagenteil (9) und unter dem in die Übernahmeposition bewegten weiteren Auflagenteil (10) ein Werkstücklager (13) für wenigstens ein zu bearbeitendes Werkstück (14) vorgesehen ist,
• **dass** die Beladevorrichtung (12) mit einer Hubbewegung in vertikaler Richtung verstellbar und auf ein unteres Hubniveau sowie ein oberes Hubniveau bewegbar ist, wobei der weitere Auflagenteil (10) bei auf dem oberen Hubniveau angeordneter Beladevorrichtung (12) in die Übernahmeposition unter der Beladevorrichtung (12) bewegbar ist,
• **dass** von der auf dem unteren Hubniveau angeordneten Beladevorrichtung (12) ein zu bearbeitendes Werkstück (14) an dem Werkstücklager (13) aufnehmbar ist und
• **dass** bei auf dem Ausweichniveau angeordnetem beladeseitigen Auflagenteil (9) und auf dem oberen Hubniveau angeordneter Beladevorrichtung (12) der in die Übernahmeposition bewegte weitere Auflagenteil (10) mittels der Beladevorrichtung (12) mit dem von der Beladevorrichtung (12) aufgenommenen zu bearbeitenden Werkstück (14) beladbar ist.

5. Werkzeugmaschine nach Anspruch 4, **dadurch gekennzeichnet, dass** der sich auf das Ausweichniveau bewegende beladeseitige Auflagenteil (9) und die sich auf das obere Hubniveau bewegende Beladevorrichtung (12) bewegungsmäßig gekoppelt sind.

6. Werkzeugmaschine nach Anspruch 5, **dadurch gekennzeichnet, dass** der beladeseitige Auflagenteil (9) mittels der sich auf das obere Hubniveau bewegenden Beladevorrichtung (12) auf das Ausweichniveau bewegbar ist.

7. Werkzeugmaschine nach einem der vorhergehenden Ansprüche, **dadurch gekennzeichnet, dass** eine Werkstück-Haltevorrichtung vorgesehen ist, mittels derer das zu bearbeitende Werkstück (14), mit welchem der weitere Auflagenteil (10) beladen ist, bei der Bewegung des weiteren Auflagenteils (10) aus der Übernahmeposition in den Entladebereich (3) relativ zu dem weiteren Auflagenteil (10) festlegbar ist.

8. Werkzeugmaschine nach Anspruch 7, **dadurch gekennzeichnet, dass** das zu bearbeitende Werkstück (14) an die Werkstück-Haltevorrichtung übergebbar ist, indem die das zu bearbeitende Werkstück (14) haltende Beladevorrichtung (12) und/oder der das zu bearbeitende Werkstück (14) lagernde weitere Auflagenteil (10) einerseits und die Werkstück-Haltevorrichtung andererseits relativ zueinander mit einer Werkstück-Übergabebewegung bewegbar sind.

9. Werkzeugmaschine nach Anspruch 7 oder Anspruch 8, **dadurch gekennzeichnet, dass** die Werkstück-Haltevorrichtung von der Werkstück-Bewegungsvorrichtung (19) gebildet ist.

10. Werkzeugmaschine nach einem der vorhergehenden Ansprüche, **dadurch gekennzeichnet, dass** eine Produkt-Haltevorrichtung vorgesehen ist, an welcher das Bearbeitungsprodukt (18), welches durch den in der Entlade-Ausgansposition angeordneten weiteren Auflagenteil (10) gelagert ist, bei der Entladebewegung des weiteren Auflagenteils (10) zum Verbleib in dem Entladebereich (3) festlegbar ist.

11. Werkzeugmaschine nach Anspruch 10, **dadurch gekennzeichnet, dass** eine Entladehilfevorrichtung (23) vorgesehen ist, mittels derer das Bearbeitungsprodukt (18) nach der Entladebewegung des weiteren Auflagenteils (10) von der Produkt-Haltevorrichtung lösbar ist.

12. Werkzeugmaschine nach Anspruch 10 oder Anspruch 11, **dadurch gekennzeichnet, dass** die Produkt-Haltevorrichtung von der Werkstück-Bewegungsvorrichtung (19) gebildet ist.

13. Werkzeugmaschine nach einem der vorhergehenden Ansprüche, **dadurch gekennzeichnet, dass** unter dem in der Entlade-Ausgangsposition angeordneten weiteren Auflagenteil (10) eine Produktablage (16) für wenigstens ein aufgrund der Entladebewegung des weiteren Auflagenteils (10) entladenes Bearbeitungsprodukt (18) vorgesehen ist.

14. Verfahren zum Be- und Entladen einer Werkstückauflage (8) einer Werkzeugmaschine zum Bearbeiten von vorzugsweise plattenartigen Werkstücken, wobei die Werkstückauflage (8) einen ersten Auflagenteil und einen weiteren Auflagenteil (10) aufweist und ein zu bearbeitendes Werkstück (14) während einer Bearbeitung des Werkstücks sowie ein bei der Bearbeitung des Werkstücks aus diesem erzeugtes Bearbeitungsprodukt (18) von der Werkstückauflage (8) gelagert werden und wobei die Werkzeugmaschine eine Werkstück-Bewegungsvorrichtung (19) aufweist,
**dadurch gekennzeichnet,**
**dass** der erste Auflagenteil einen beladeseitigen Auflagenteil (9) in einem Beladebereich (2) der Werkzeugmaschine bildet und in vertikaler Richtung auf ein Ausweichniveau bewegt wird, das als oberes Ausweichniveau oberhalb oder als unteres Ausweichniveau unterhalb eines Beladeniveaus des beladeseitigen Auflagenteils (9) angeordnet ist,
**dass** der weitere Auflagenteil (10) relativ zu dem beladeseitigen Auflagenteil (9) in den Beladebereich (2) der Werkzeugmaschine und dort in eine Übernahmeposition unter dem auf das obere Ausweichniveau bewegten beladeseitigen Auflagenteil (9) oder über dem auf das untere Ausweichniveau bewegten beladeseitigen Auflagenteil (9) bewegt wird,
**dass** der weitere Auflagenteil (10) in der Übernahmeposition mit einem zu bearbeitenden Werkstück (14) beladen wird,
**dass** der mit dem zu bearbeitenden Werkstück (14) beladene weitere Auflagenteil (10) relativ zu dem beladeseitigen Auflagenteil (9) aus der Übernahmeposition in dem Beladebereich (2) in einen gegenüber dem Beladebereich (2) in horizontaler Richtung versetzten Entladebereich (3) der Werkzeugmaschine bewegt und dort auf einem Beladeniveau angeordnet wird,
**dass** der beladeseitige Auflagenteil (9) auf dem Beladeniveau angeordnet wird, wobei der auf dem Beladeniveau angeordnete und mit dem zu bearbeitenden Werkstück (14) beladene weitere Auflagenteil (10) und der auf dem Beladeniveau angeordnete beladeseitige Auflagenteil (9) an ihrer Oberseite in horizontaler Richtung miteinander fluchten,
**dass** das zu bearbeitende Werkstück (14) mittels der Werkstück-Bewegungsvorrichtung (19) mit einer horizontalen Werkstückbewegung über den auf dem Beladeniveau angeordneten weiteren Auflagenteil (10) und den auf dem Beladeniveau angeordneten beladeseitigen Auflagenteil (9) bewegt wird,
**dass** nach der Werkstückbearbeitung das bei der Werkstückbearbeitung erzeugte Bearbeitungsprodukt (18) von dem in dem Entladebereich (3) in einer Entlade-Ausgangsposition angeordneten weiteren Auflagenteil (10) gelagert wird und
**dass** der beladeseitige Auflagenteil (9) auf dem Ausweichniveau angeordnet und der weitere Auflagenteil (10) relativ zu dem beladeseitigen Auflagenteil (9) mit einer Entladebewegung aus der Entlade-Ausgangsposition in dem Entladebereich (3) in die Übernahmeposition in dem Beladebereich (2) bewegt wird, wobei der weitere Auflagenteil (10) bei der Entladebewegung unter Entladen des Bearbeitungsprodukts (18) relativ zu dem in dem Entladebereich (3) verbleibenden Bearbeitungsprodukt (18) bewegt wird.

15. Verfahren nach Anspruch 14, **dadurch gekennzeichnet, dass** das Bearbeitungsprodukt (18) bei der Entladebewegung des weiteren Auflagenteils (10) in dem Entladebereich (3) verbleibt, indem das Bearbeitungsprodukt (18) von der eine Produkt-Haltevorrichtung ausbildenden Werkstück-Bewegungsvorrichtung (19) gehalten wird.

## Claims

1. Machine tool for processing, preferably plate-like, workpieces,
• having a workpiece support (8) for supporting a workpiece (14) which is intended to be processed during a processing operation of the workpiece and for supporting a processing product (18) which is produced from the workpiece during the processing operation of the workpiece, wherein the workpiece support (8) has a first support portion and an additional support portion (10), and
• having a workpiece movement device (19),
**characterised in that**
• the first support portion is provided as a loading-side support portion (9) and is arranged in a loading region (2) of the machine tool,
• **in that** the additional support portion (10) can be moved relative to the loading-side support portion (9) into the loading region (2) and into an unloading region (3) of the machine tool which is offset in the horizontal direction with respect to the loading region (2),
• wherein the loading-side support portion (9) can be adjusted in a vertical direction and can be moved onto a loading level and onto a bypass level, the bypass level being an upper bypass level that is arranged above the loading level or the bypass level being a lower bypass level that is arranged below the loading level,
• wherein the additional support portion (10) when the loading-side support portion (9) is arranged on the bypass level can be moved in the loading region (2) into a receiving position below the loading-side support portion (9) on the upper bypass level or above the loading-side support portion on the lower bypass level (9) and can be loaded in the receiving position with a workpiece (14) which is intended to be processed,
• wherein the additional support portion (10) which is loaded with the workpiece (14) which is intended to be processed can be moved from the receiving position in the loading region (2) into the unloading region (3) and can be arranged in the unloading region (3) on a loading level,
• wherein the additional support portion (10) which is arranged in the unloading region (3) on the loading level and which is loaded with the workpiece (14) which is intended to be processed and the loading-side support portion (9) which is arranged on the loading level are located beside each other and are in alignment with each other at the upper side thereof in the horizontal direction in such a manner that the workpiece (14) which is intended to be processed can be moved by means of the workpiece movement device (19) with a horizontal workpiece movement over the additional support portion (10) and the loading-side support portion (9),
• wherein the additional support portion (10) after the workpiece processing operation can be arranged in the unloading region (3) in an unloading starting position in which the processing product (18) which has been produced during the workpiece processing operation can be supported by the additional support portion (10) and
• wherein the additional support portion (10) when the loading-side support portion (9) is arranged on the bypass level can be moved with an unloading movement from the unloading starting position in the unloading region (3) into the receiving position in the loading region (2) and in this instance can be moved relative to the processing product (18) remaining in the unloading region (3), the processing product (18) thus being unloaded.

2. Machine tool according to claim 1, **characterised in that** an operating level of the loading-side support portion (9) and the additional support portion (10) is provided as the loading level of the loading-side support portion (9) and the additional support portion (10), and **in that** the additional support portion (10) which is arranged in the unloading region (3) on the operating level and which is loaded with the workpiece (14) intended to be processed and the loading-side support portion (9) which is arranged on the operating level are in alignment with each other at the upper side thereof in a horizontal direction in such a manner that the workpiece (14) which is intended to be processed can be moved by means of the workpiece movement device (19) in order to carry out a workpiece processing operation with a horizontal workpiece movement over the additional support portion (10) and the loading-side support portion (9).

3. Machine tool according to claim 1 or claim 2, **characterised in that**
• the loading-side support portion (9) can be moved onto a bypass level above the loading level,
• **in that** the additional support portion (10) can be moved into a receiving position below the loading-side support portion (9) which is arranged on the bypass level, and
• **in that** between the loading-side support portion (9) which is arranged on the bypass level and the additional support portion (10) which is moved into the receiving position there is provided a loading device (12) by means of which the additional support portion (10) can be loaded with a workpiece (14) which is intended to be processed.

4. Machine tool according to claim 3, **characterised in that**
• below the loading-side support portion (9) and below the additional support portion (10) which is moved into the receiving position a workpiece store (13) for at least one workpiece (14) which is intended to be processed is provided,
• **in that** the loading device (12) can be adjusted with a lifting movement in a vertical direction and can be moved onto a lower lifting level and an upper lifting level, wherein the additional support portion (10) when the loading device (12) is arranged on the upper lifting level can be moved into the receiving position below the loading device (12),
• **in that** a workpiece (14) which is intended to be processed can be picked up at the workpiece store (13) by the loading device (12) which is arranged on the lower lifting level, and
• **in that**, when the loading-side support portion (9) is arranged on the bypass level and the loading device (12) is arranged on the upper lifting level, the additional support portion (10) which is moved into the receiving position can be loaded by means of the loading device (12) with the workpiece (14) which is intended to be processed and which has been picked up by the loading device (12).

5. Machine tool according to claim 4, **characterised in that** the loading-side support portion (9) which moves onto the bypass level and the loading device (12) which moves onto the upper lifting level are coupled in terms of movement.

6. Machine tool according to claim 5, **characterised in that** the loading-side support portion (9) can be moved onto the bypass level by means of the loading device (12) which moves onto the upper lifting level.

7. Machine tool according to any one of the preceding claims, **characterised in that** there is provided a workpiece retention device by means of which the workpiece (14) which is intended to be processed and with which the additional support portion (10) is loaded can be secured relative to the additional support portion (10) during the movement of the additional support portion (10) from the receiving position into the unloading region (3).

8. Machine tool according to claim 7, **characterised in that** the workpiece (14) which is intended to be processed can be transferred to the workpiece retention device by the loading device (12) which retains the workpiece (14) which is intended to be processed and/or the additional support portion (10) which supports the workpiece (14) which is intended to be processed, on the one hand, and the workpiece retention device, on the other hand, being able to be moved relative to each other with a workpiece transfer movement.

9. Machine tool according to claim 7 or claim 8, **characterised in that** the workpiece retention device is formed by the workpiece movement device (19).

10. Machine tool according to any one of the preceding claims, **characterised in that** there is provided a product retention device on which the processing product (18), which is supported by means of the additional support portion (10) which is arranged in the unloading starting position, can be secured during the unloading movement of the additional support portion (10) for remaining in the unloading region (3).

11. Machine tool according to claim 10, **characterised in that** there is provided an auxiliary unloading device (23) by means of which the processing product (18) can be released from the product retention device after the unloading movement of the additional support portion (10).

12. Machine tool according to claim 10 or claim 11, **characterised in that** the product retention device is formed by the workpiece movement device (19).

13. Machine tool according to any one of the preceding claims, **characterised in that** below the additional support portion (10) which is arranged in the unloading starting position a product store (16) for at least one processing product (18) which is unloaded as a result of the unloading movement of the additional support portion (10) is provided.

14. Method for loading and unloading a workpiece support (8) of a machine tool for processing, preferably plate-like, workpieces, wherein the workpiece support (8) has a first support portion and an additional support portion (10), wherein a workpiece (14) which is intended to be processed is supported by the workpiece support (8) during a processing operation of the workpiece and a processing product (18) which is produced from the workpiece during the processing of the workpiece is supported by the workpiece support (8) and wherein the machine tool has a workpiece movement device (19),
**characterised in that**
the first support portion forms a loading-side support portion (9) in a loading region (2) of the machine tool and is moved in a vertical direction onto a bypass level which is arranged above a loading level of the loading-side support portion (9) as an upper bypass level or below the loading level of the loading-side support portion (9) as a lower bypass level,
**in that** the additional support portion (10) is moved relative to the loading-side support portion (9) into the loading region (2) of the machine tool and at that location is moved into a receiving position below the loading-side support portion (9) moved onto the upper bypass level or above the loading-side support portion (9) moved onto the lower bypass level,
**in that** the additional support portion (10) is loaded in the receiving position with a workpiece (14) which is intended to be processed,
**in that** the additional support portion (10) which is loaded with the workpiece (14) which is intended to be processed is moved relative to the loading-side support portion (9) from the receiving position in the loading region (2) into an unloading region (3) of the machine tool which is offset in the horizontal direction relative to the loading region (2) and is arranged at that location on a loading level,
**in that** the loading-side support portion (9) is arranged on the loading level, wherein the additional support portion (10) which is arranged on the loading level and which is loaded with the workpiece (14) which is intended to be processed and the loading-side support portion (9) which is arranged on the loading level are in alignment with each other in a horizontal direction at the upper side thereof,
**in that** the workpiece (14) which is intended to be processed is moved by means of the workpiece movement device (19) with a horizontal workpiece movement over the additional support portion (10) which is arranged on the loading level and the loading-side support portion (9) which is arranged on the loading level,
**in that** after the workpiece processing operation the processing product (18) which has been produced during the workpiece processing operation is supported by the additional support portion (10) which is arranged in the unloading region (3) in an unloading starting position, and
**in that** the loading-side support portion (9) is arranged on the bypass level and the additional support portion (10) is moved relative to the loading-side support portion (9) with an unloading movement from the unloading starting position in the unloading region (3) into the receiving position in the loading region (2), wherein the additional support portion (10) with the processing product (18) being unloaded is moved, during the unloading movement, relative to the processing product (18) remaining in the unloading region (3).

15. Method according to claim 14, **characterised in that** the processing product (18) remains in the unloading region (3) during the unloading movement of the additional support portion (10) by the processing product (18) being retained by the workpiece movement device (19) which forms a product retention device.

## Revendications

1. Machine-outil dévolue à l'usinage de pièces préférentiellement du type plaque, comprenant
• un support (8) de pièces destiné à supporter une pièce (14) à usiner, au cours d'un usinage de ladite pièce, et à supporter un produit d'usinage (18) fabriqué à partir de ladite pièce lors de l'usinage de celle-ci, ledit support (8) de pièces comportant une première partie et une partie de support supplémentaire (10),
• ainsi qu'un dispositif (19) de mise en mouvement de pièces,
**caractérisée par le fait**
• **que** la première partie du support de pièces est prévue en tant que partie de support (9) située côté chargement, et est disposée dans une zone de chargement (2) de la machine-outil,
• **que** la partie de support (10) supplémentaire peut être mue, par rapport à ladite partie de support (9) située côté chargement, dans ladite zone de chargement (2) et dans une zone de déchargement (3) de la machine-outil qui est décalée, dans le sens horizontal, vis-à-vis de ladite zone de chargement (2),
• **sachant que** ladite partie de support (9) située côté chargement, peut être déplacée dans le sens vertical et peut être mue à un niveau de chargement, ainsi qu'à un niveau d'évitement situé au-dessus dudit niveau de chargement en tant que niveau d'évitement supérieur ou au-dessous dudit niveau de chargement en tant que niveau d'évitement inférieur,
• **sachant que,** lorsque ladite partie de support (9) située côté chargement est disposée au niveau d'évitement, ladite partie de support (10) supplémentaire peut être mue, dans la zone de chargement (2), à un emplacement de chargement au-dessous de ladite partie de support (9) située côté chargement ladite partie étant mue au niveau d'évitement supérieur, ou au-dessus de ladite partie de support (9) située côté chargement ladite partie étant mue au niveau d'évitement inférieur, et peut être chargée d'une pièce (14) à usiner, audit emplacement de chargement,
• **sachant que** ladite partie de support (10) supplémentaire, chargée de ladite pièce (14) à usiner, peut être mue à partir de l'emplacement de chargement dans la zone de chargement (2) pour parvenir à la zone de déchargement, et peut être disposée à un niveau de chargement dans ladite zone de déchargement (3),
• **sachant que** ladite partie de support (10) supplémentaire, chargée de ladite pièce (14) à usiner et disposée au niveau de chargement dans la zone de déchargement (3), et ladite partie de support (9) située côté chargement ladite partie étant disposée audit niveau de chargement, sont placées en juxtaposition et se trouvent dans l'alignement l'une de l'autre par leur face supérieure, dans le sens horizontal, de façon telle que ladite pièce (14) à usiner puisse être mue, au moyen du dispositif (19) de mise en mouvement de pièces, au-dessus de ladite partie de support (10) supplémentaire et de ladite partie de support (9) située côté chargement, en accomplissant un mouvement de pièce horizontal,
• **sachant qu'**après l'usinage de la pièce, ladite partie de support (10) supplémentaire peut être disposée, dans la zone de déchargement (3), en un emplacement initial de déchargement auquel le produit d'usinage (18), fabriqué lors de l'usinage de ladite pièce, peut être supporté par ladite partie de support (10) supplémentaire, et
• **sachant que,** lorsque ladite partie de support (9) située côté chargement est disposée au niveau d'évitement, ladite partie de support (10) supplémentaire peut être mue, en accomplissant un mouvement de déchargement, à partir dudit emplacement initial de déchargement dans la zone de déchargement (3) jusqu'à l'emplacement de chargement dans la zone de chargement (2), en pouvant alors être mue par rapport au produit d'usinage (18) ledit produit demeurant dans ladite zone de déchargement (3), avec déchargement dudit produit d'usinage (18).

2. Machine-outil selon la revendication 1, **caractérisée par le fait qu'**un niveau de travail de la partie de support (9) située côté chargement et de la partie de support (10) supplémentaire est prévu en tant que niveau de chargement de ladite partie de support (9) située côté chargement et de ladite partie de support (10) supplémentaire; et **par le fait que** ladite partie de support (10) supplémentaire, disposée au niveau de travail dans la zone de déchargement (3) et chargée de la pièce (14) à usiner, et ladite partie de support (9) située côté chargement ladite partie étant disposée audit niveau de travail, se trouvent dans l'alignement l'une de l'autre par leur face supérieure, dans le sens horizontal, de façon telle que ladite pièce (14) à usiner puisse être mue, au moyen du dispositif (19) de mise en mouvement de pièces, au-dessus de ladite partie de support (10) supplémentaire et de ladite partie de support (9) située côté chargement, en accomplissant un mouvement de pièce horizontal en vue de l'exécution d'un usinage de pièce.

3. Machine-outil selon la revendication 1 ou la revendication 2, **caractérisée par le fait**
• **que** la partie de support (9) située côté chargement, peut être mue à un niveau d'évitement au-dessus du niveau de chargement,
• **que** la partie de support (10) supplémentaire peut être mue à un emplacement de chargement, au-dessous de ladite partie de support (9) située côté chargement ladite partie étant disposée audit niveau d'évitement, et
• **qu'**il est prévu, entre ladite partie de support (9) située côté chargement ladite partie étant disposée audit niveau d'évitement, et ladite partie de support (10) supplémentaire mue audit emplacement de chargement, un dispositif de chargement (12) au moyen duquel ladite partie de support (10) supplémentaire peut être chargée d'une pièce (14) à usiner.

4. Machine-outil selon la revendication 3, **caractérisée par le fait**
• **qu'**une zone (13) de stockage de pièces, dédiée à au moins une pièce (14) à usiner, est prévue au-dessous de la partie de support (9) située côté chargement et au-dessous de la partie de support (10)supplémentaire, mue à l'emplacement de chargement,
• **que** le dispositif de chargement (12) peut être déplacé par un mouvement de levage dans le sens vertical, et peut être mû à un niveau de levage inférieur, ainsi que à un niveau de levage supérieur, sachant que ladite partie de support (10) supplémentaire peut être mue à l'emplacement de chargement, au-dessous du dispositif de chargement (12), lorsque ledit dispositif de chargement (12) se trouve au niveau de levage supérieur,
• **qu'**une pièce (14) à usiner peut être reçue, dans ladite zone (13) de stockage de pièces, par ledit dispositif de chargement (12) situé au niveau de levage inférieur, et
• **que**, lorsque la partie de support (9) située côté chargement est disposée au niveau d'évitement, et que ledit dispositif de chargement (12) se trouve au niveau de levage supérieur, la partie de support (10) supplémentaire mue à l'emplacement de chargement peut être chargé, au moyen dudit dispositif de chargement (12), de ladite pièce (14) à usiner reçue par ledit dispositif de chargement (12).

5. Machine-outil selon la revendication 4, **caractérisée par** un couplage des mouvements de la partie de support (9) située côté chargement, se mouvant vers le niveau d'évitement, et du dispositif de chargement (12) se mouvant vers le niveau de levage supérieur.

6. Machine-outil selon la revendication 5, **caractérisée par le fait que** la partie de support (9) située côté chargement, peut être mue vers le niveau d'évitement au moyen du dispositif de chargement (12) se mouvant vers le niveau de levage supérieur.

7. Machine-outil selon l'une des revendications précédentes, **caractérisée par le fait qu'**il est prévu un dispositif de retenue de pièces au moyen duquel la pièce (14) à usiner, de laquelle la partie de support (10) supplémentaire est chargée, peut être bloquée à demeure, par rapport à ladite partie de support (10) supplémentaire, lors du mouvement de ladite partie de support (10) supplémentaire à partir de l'emplacement de chargement vers la zone de déchargement (3).

8. Machine-outil selon la revendication 7, **caractérisée par le fait que** la pièce (14) à usiner peut être transférée au dispositif de retenue de pièces attendu que, d'une part, le dispositif de chargement (12) retenant la pièce (14) à usiner, et/ou la partie de support (10) supplémentaire supportant ladite pièce (14) à usiner et, d'autre part, ledit dispositif de retenue de pièces, peuvent être animés d'un mouvement relatif de transfert de pièce.

9. Machine-outil selon la revendication 7 ou la revendication 8, **caractérisée par le fait que** le dispositif de retenue de pièces est formé par le dispositif (19) de mise en mouvement de pièces.

10. Machine-outil selon l'une des revendications précédentes, **caractérisée par le fait qu'**il est prévu un dispositif de retenue de produits sur lequel le produit d'usinage (18), supporté par la partie de support (10) supplémentaire occupant l'emplacement initial de déchargement, peut être bloqué à demeure lors du mouvement de déchargement de ladite partie de support (10) supplémentaire, en vue de demeurer dans la zone de déchargement (3).

11. Machine-outil selon la revendication 10, **caractérisée par le fait qu'**il est prévu un dispositif auxiliaire de déchargement (23), au moyen duquel le produit d'usinage (18) peut être dissocié du dispositif de retenue de produits après le mouvement de déchargement de la partie de support (10) supplémentaire.

12. Machine-outil selon la revendication 10 ou la revendication 11, **caractérisée par le fait que** le dispositif de retenue de produits est formé par le dispositif (19) de mise en mouvement de pièces.

13. Machine-outil selon l'une des revendications précédentes, **caractérisée par le fait qu'**une zone (16) collectrice de produits, dédiée à au moins un produit d'usinage (18) déchargé suite au mouvement de déchargement de la partie de support (10) supplémentaire, est prévue au-dessous de ladite partie de support (10) supplémentaire occupant l'emplacement initial de déchargement.

14. Procédé de chargement et de déchargement d'un support (8) de pièces d'une machine-outil dévolue à l'usinage de pièces préférentiellement du type plaque, le support (8) de pièces comportant une première partie et une partie supplémentaire (10), ledit support (8) de pièces supportant une pièce (14) à usiner, au cours d'un usinage de ladite pièce, ainsi qu'un produit d'usinage (18) fabriqué à partir de ladite pièce lors de l'usinage de cette dernière, et la machine-outil étant équipée d'un dispositif (19) de mise en mouvement de pièces,
**caractérisé par le fait**
• **que** la première partie du support de pièces forme une partie de support (9) située côté chargement, dans une zone de chargement (2) de la machine-outil, et est mue dans le sens vertical à un niveau d'évitement situé, en tant que niveau d'évitement supérieur, au-dessus d'un niveau de chargement de ladite partie de support (9) située côté chargement, ou, en tant que niveau d'évitement inférieur, au-dessous dudit niveau de chargement,
• **que** la partie de support (10) supplémentaire est mue, par rapport à ladite partie de support (9) située côté chargement, dans ladite zone de chargement (2) de la machine-outil dans laquelle elle est mue à un emplacement de chargement au-dessous de ladite partie de support (9) située côté chargement ladite partie étant mue au niveau d'évitement supérieur, ou au-dessus de ladite partie de support (9) située côté chargement ladite partie étant mue au niveau d'évitement inférieur,
• **que** ladite partie de support (10) supplémentaire est chargée d'une pièce (14) à usiner, audit emplacement de chargement,
• **que** ladite partie de support (10) supplémentaire, chargée de ladite pièce (14) à usiner, est mue par rapport à ladite partie de support (9) située côté chargement, à partir de l'emplacement de chargement dans la zone de chargement (2), pour parvenir à une zone de déchargement (3) de la machine-outil qui est décalée dans le sens horizontal, vis-à-vis de ladite zone de chargement (2), et dans laquelle elle est disposée à un niveau de chargement,
• **que** ladite partie de support (9) située côté chargement, est disposée audit niveau de chargement, sachant que la partie de support (10) supplémentaire, chargée de ladite pièce (14) à usiner et disposée au niveau de chargement, et ladite partie de support (9) située côté chargement ladite partie étant disposée audit niveau de chargement, se trouvent dans l'alignement l'une de l'autre par leur face supérieure, dans le sens horizontal,
• **que** ladite pièce (14) à usiner est mue, au moyen du dispositif (19) de mise en mouvement de pièces, au-dessus de ladite partie de support (10) supplémentaire disposée au niveau de chargement et de ladite partie de support (9) située côté chargement ladite partie étant disposée audit niveau de chargement, en accomplissant un mouvement de pièce horizontal,
• **que** le produit d'usinage (18) fabriqué lors de l'usinage de la pièce est supporté, après l'usinage de ladite pièce, par ladite partie de support (10) supplémentaire disposée en un emplacement initial de déchargement, dans ladite zone de déchargement (3), et
• **que** ladite partie de support (9) située côté chargement, est disposée au niveau d'évitement et ladite partie de support (10) supplémentaire est mue par rapport à ladite partie de support (9) située côté chargement, à partir de l'emplacement initial de déchargement dans la zone de déchargement (3), jusqu'à l'emplacement de chargement dans la zone de chargement (2), en accomplissant un mouvement de déchargement, sachant que, lors dudit mouvement de déchargement, ladite partie de support (10) supplémentaire est mue par rapport au produit d'usinage (18) demeurant dans ladite zone de déchargement (3), avec déchargement dudit produit d'usinage (18).

15. Procédé selon la revendication 14, **caractérisé par le fait que** le produit d'usinage (18) demeure dans la zone de déchargement (3), lors du mouvement de déchargement de la partie de support (10) supplémentaire, attendu que ledit produit d'usinage (18) est retenu par le dispositif (19) de mise en mouvement de pièces qui constitue un dispositif de retenue de produits.
